Europäisches Patentamt

European Patent Office

Office européen des brevets

(19)

(11) Veröffentlichungsnummer: **0 320 831**

**A2**

(12)

# EUROPÄISCHE PATENTANMELDUNG

(21) Anmeldenummer: 88120678.3

(22) Anmeldetag: 10.12.88

(51) Int. Cl.4: **H01M 2/22 , H01M 10/39**

(30) Priorität: 16.12.87 DE 3742607

(43) Veröffentlichungstag der Anmeldung:
**21.06.89 Patentblatt 89/25**

(84) Benannte Vertragsstaaten:
**DE FR GB**

(71) Anmelder: **Asea Brown Boveri Aktiengesellschaft**
**Kallstadter Strasse 1**
**D-6800 Mannheim 31(DE)**

(72) Erfinder: **Kahlen, Hans, Dr. Prof.**
**Brunnenstrasse 33**
**D-6750 Kaiserslautern(DE)**
Erfinder: **Hasenauer, Dieter**
**Freudenbergstrasse 13**
**D-6940 Weinheim(DE)**

(74) Vertreter: **Rupprecht, Klaus, Dipl.-Ing. et al**
**c/o BBC Brown Boveri Aktiengesellschaft**
**ZPT Postfach 100351 Kallstadter Strasse 1**
**D-6800 Mannheim 1(DE)**

(54) Hochtemperatur-Speicherbatterie.

(57) Die Erfindung bezieht sich auf eine Hochtemperatur-Speicherbatterie (1), in deren Innenraum (7) wiederaufladbare Speicherzellen (2) angeordnet sind, wobei jeweils zwei Reihen von Speicherzellen (2) zu einem Modul (6) zusammengefaßt sind. Erfindungsgemäß weist die Hochtemperatur-Speicherbatterie (1) eine gerade Anzahl von Speicherzellen (2) auf. Um definierte Spannungswerte an den Speicherzellen (2) abgreifen zu können, sind Speicherzellen, die in einer oder mehreren parallel zueinander verlaufenden, nebeneinander liegenden Ebenen (30 bis 41) positioniert sind, miteinander in Reihe geschaltet.

Fig 3

EP 0 320 831 A2

## Hochtemperatur-Speicherbatterie

Die Erfindung bezieht sich auf eine Hochtemperatur-Speicherbatterie gemäß dem Oberbegriff des Patentanspruches 1.

Solche Hochtemperatur-Speicherbatterien, sind aus einer Vielzahl von elektrochemischen Speicherzellen aufgebaut, und werden in vermehrtem Maße für den Antrieb von Elektrofahrzeugen eingesetzt. Bisher sind Hochtemperatur-Speicherbatterie bekannt, die beispielsweise aus Speicherzellen auf der Basis von Natrium und Schwefel aufgebaut sind. Für die Ausbildung einer solchen Batterie werden zwischen 360 und 500 Speicherzellen benötigt. Jeder der verwendeten Speicherzellen weist eine Eigenspannung von 2 Volt auf. Für den Betrieb von Elektrofahrzeugen werden bei den bisher verwendeten Hochtemperatur-Speicherbatterien die Speicherzellen so miteinander verschaltet, daß eine Gesamtspannung von 200 Volt bei voll aufgeladenen Zellen erreicht wird. Wenn der Einsatzbereich der Hochtemperatur-Speicherbatterien erweiterbar sein soll, sind hierfür Hochtemperatur-Speicherbatterien nicht geeignet, an denen nur eine Spannung von 200 Volt abgegriffen werden kann.

Der Erfindung liegt deshalb die Aufgabe zugrunde, eine Hochtemperatur-Speicherbatterie zu schaffen, bei der die Speicherzellen so verschaltet sind, daß definierte Spannungen erzeugt und auch abgegriffen werden können.

Diese Aufgabe wird erfindungsgemäß durch die Merkmale des Patentanspruches 1 gelöst.

Weitere erfindungswesentliche Merkmale sind in den Unteransprüchen gekennzeichnet.

Die Erfindung wird nachfolgend anhand von Zeichnungen näher erläutert:

Es zeigen:

Figur 1: Einen Horizontalschnitt durch eine Hochtemperatur-Speicherbatterie,

Figur 2: eine Hochtemperatur-Speicherbatterie mit zwölf parallel geschalteten Reihen von Speicherzellen,

Figur 3: sechs Parallelschaltungen aus in Reihe geschalteten Speicherzellen,

Figur 4: vier Parallelschaltungen aus in Reihe geschalteten Speicherzellen,

Figur 5: drei Parallelschaltungen aus in Reihe geschalteten Speicherzellen,

Figur 6: zwei Parallelschaltungen aus in Reihe geschalteten Speicherzellen,

Figur 7: eine Reihenschaltung, die sämtliche Zellen einer Hochtemperatur-Speicherbatterie umfaßt,

Figur 8: eine schematisch dargestellte elektrochemische Speicherzelle.

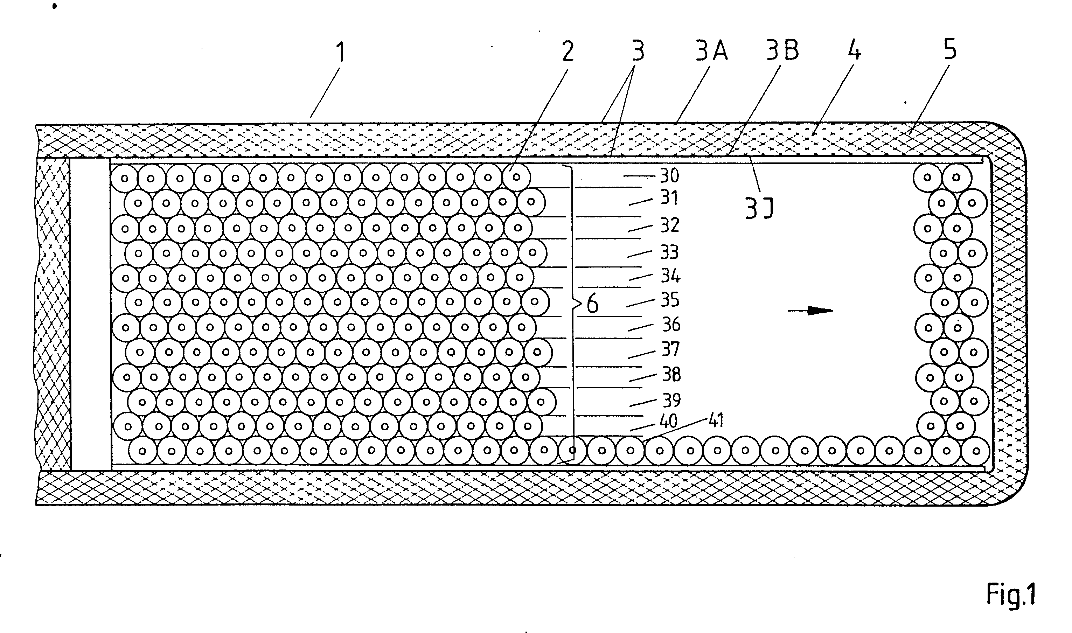

In Figur 1 ist eine Hochtemperatur-Speicherbatterie 1 dargestellt, innerhalb derer elektrochemische Speicherzellen 2 auf der Basis von Natrium und Schwefel angeordnet sind. Die Hochtemperatur-Speicherbatterie 1 wird nach außenhin durch ein doppelwandiges Gehäuse 3 begrenzt, wobei zwischen der äußeren Gehäusewandung 3A und der inneren Gehäusewandung 3B ein Raum 4 vorgesehen ist, der mit einem Isoliermaterial 5 ausgefüllt und zusätzlich evakuiert ist.

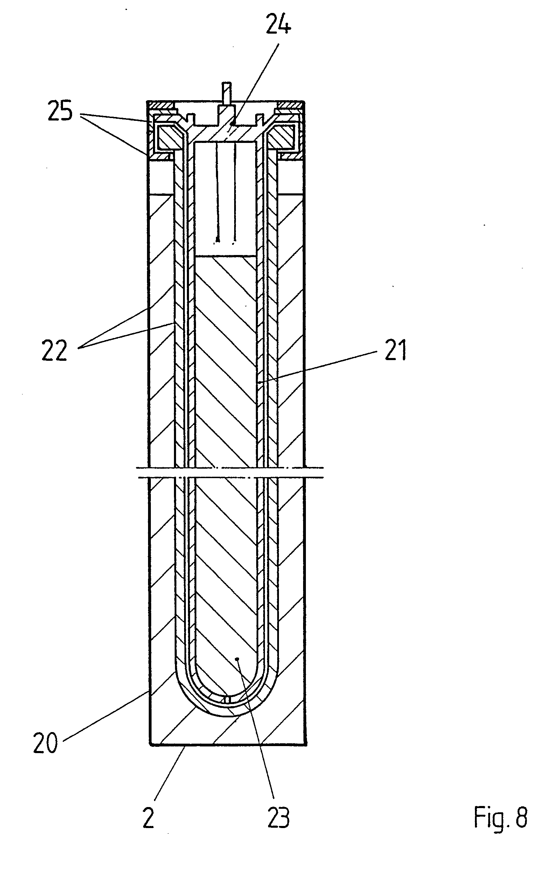

In Figur 8 ist eine der Speicherzellen 2 dargestellt, welche zur Ausbildung der Hochtemperaturbatterie 1 benutzt werden. Die Speicherzelle 2 wird nach außenhin durch ein becherförmiges Gehäuse 20 begrenzt, das aus einem korrosionsbeständigen Material gefertigt ist. Innerhalb dieses becherförmigen Gehäuses 20 ist ein ebenfalls becherförmig ausgebildeter Festelektrolyt 21 angeordnet, der aus Beataaluminiumoxid hergestellt ist. Die Abmessungen des Festelektrolyten 21 sind so gewählt, daß zwischen seinen Außenflächen und den Innenflächen des Gehäuses 20 ein zusammenhängender Raum 22 verbleibt, der als Kathodenraum dient und mit Schwefel ausgefüllt ist. Das Innere des Festelektrolyten 21 dient als Anodenraum 23, der das Natrium enthält. Das Gehäuse 20 dient gleichzeitig als kathodischer Stromabnehmer. Als anodischer Stromabnehmer ist ein elektrisch leitender Stab 24 (hier nicht vollständig dargestellt) vorgesehen, der weit in den Anodenraum 23 hineinragt und einige Millimeter über die Speicherzelle 2 nach außen übersteht. Die gesamte Speicherzelle 2 ist nach außenhin hermetisch durch eine Verschlußvorrichtung 25 verschlossen.

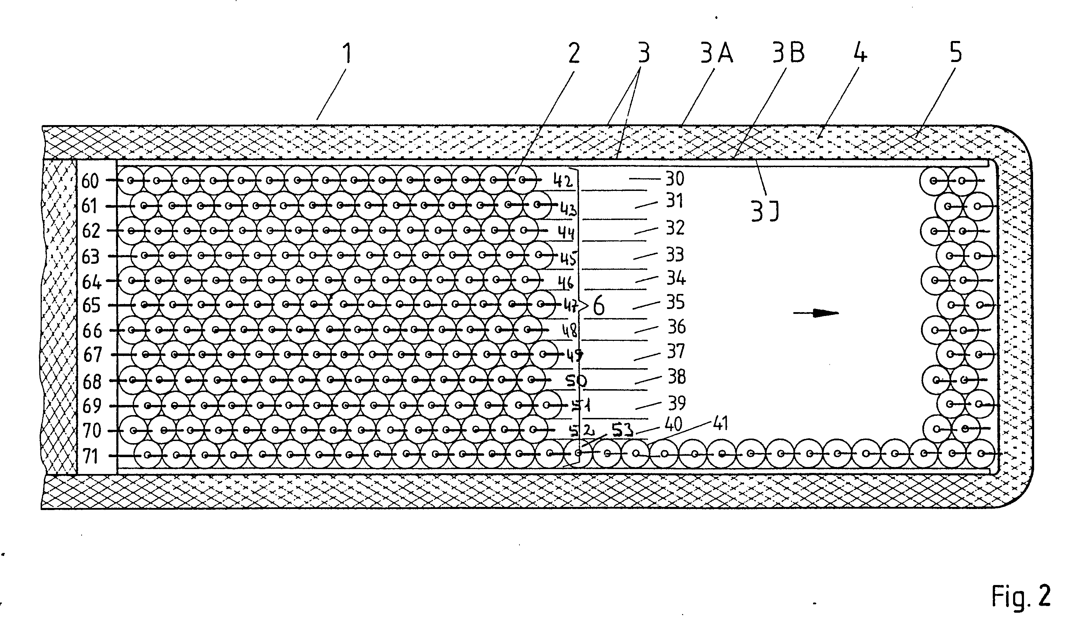

Die in Figur 1 dargestellte Hochtemperatur-Speicherbatterie 1 enthält in ihrem Inneren 360 solcher Speicherzellen 2 auf der Basis von Natrium und Schwefel. Wie anhand von Figur 1 zu sehen ist, sind senkrecht zur Längsachse der Hochtemperatur-Speicherbatterie 1 Reihen mit 12 solcher Speicherzellen 2 angeordnet. Jeweils 2 Reihen mit zwölf dieser Speicherzellen sind zu einem Modul 6 zusammengefaßt. Innerhalb der Hochtemperatur-Speicherbatterie 1 sind 15 solcher Module 6 angeordnet. Wie Figur 1 zeigt, sind die Speicherzellen 2 eines jeden Moduls 6 versetzt zueinander angeordnet, so daß es insgesamt zu einer hexagonalen Anordnung der gesamten Speicherzellen 2 innerhalb der Hochtemperatur-Speicherbatterie 1 kommt. Die Zahl der Speicherzellen 2 pro Hochtemperaturbatterie 1 ist nicht auf 360 begrenzt. Es können auch Hochtemperatur-Speicherbatterien 1 mit mehr oder weniger Speicherzellen gebaut werden. Erfindungsgemäß sollte jedoch jede der Hochtemperatur-Speicherbatterien 1 eine gerade Anzahl von Speicherzellen 2 aufweisen, da sich hiermit die optimal günstigste Schaltungskombination erzielen läßt. Wie anhand von Figur 1 weiterhin zu sehen ist, liegen jeweils zwei Speicherzellen 6 eines jeden Moduls 6 in einer Ebene mit wiederum jeweils zwei Speicherzellen 2 der direkt angrenzenden Module 6. Bei der dargestellten Hochtemperatur-Speicherbatterie gibt es insgesamt 12 solcher Ebenen 30 bis 41, in denen jeweils zwei Speicherzellen 2 aller Module 6 angeordnet sind. Wie Figur 1 weiterhin zu entnehmen ist, verlaufen diese Ebenen 30 bis 41 parallel zur Längsachse der Hochtemperatur-Speicherbatterie. Durch eine Reihenschaltung von Speicher zellen 2, die in einer oder mehreren nebeneinander liegenden Ebenen positioniert sind, können definierte Spannungswerte erzeugt und abgegriffen werden. Bei der hier dargestellten Hochtemperatur-Speicherbatterie 1 können bis zu zwölf Parallelschaltungen durch das in Reihe schalten der in den Ebenen 30 bis 41 angeordneten Speicherzellen 2 gebildet werden. In Figur 2 ist eine der möglichen Schaltungen der Speicherzellen 2 innerhalb der Hochtemperatur-Speicherbatterie 1 angegeben. Die in Figur 2 dargestellte Hochtemperatur-Speicherbatterie 1 stimmt in ihrem Aufbau mit der in Figur 1 dargestellten Hochtemperatur-Speicherbatterie 1 überein. Hierbei sind die in der Ebene 30 angeordneten Speicherzellen 2 alle miteinander in Reihe geschaltet. Das gleiche gilt für die in den übrigen Ebenen 31 bis 41 angeordneten Speicherzellen 2. Durch die Reihenschaltung der Speicherzellen in diesen Ebenen werden zwölf Parallelschaltungen ausgebildet. Unter der Voraussetzung, daß jede Speicherzelle 2 eine Zellenspannung von 2 Volt liefert, kann an jeder Reihenschaltung 42,43,44,45,46,47,48,49,50,51, 52,53 der Ebenen 30 bis 41 jeweils eine Spannung von 60 Volt abgegriffen werden. Die Parallelschaltung dieser in den Ebenen 30 bis 41 in Reihe geschalteten Speicherzellen wird durch die Anschlüsse 60,61,62,63,64,65,66, 67,68,69,70 und 71 ermöglicht. Diese Anschlüsse sind an beiden Enden der Reihenschaltung 42,43,44,45,46,47,48, 49,50,51,52,53 vorgesehen, jedoch nur auf einer Seite dargestellt.

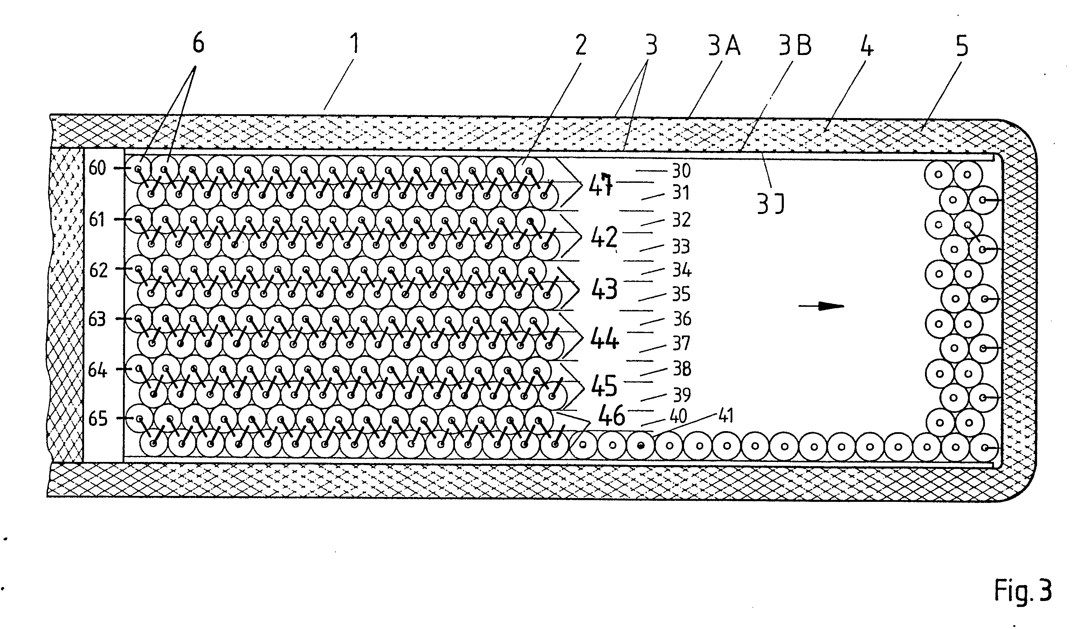

In Figur 3 ist eine weitere Hochtemperatur-Speicherbatterie dargestellt, die vom Aufbau her der in Figur 1 dargestellten Hochtemperatur-Speicherbatterie 1 entspricht. Abweichend von den Ausführungen in Figur 2 sind hierbei die Speicherzellen 2 in den Ebenen 30 und 31 miteinander in Reihe geschaltet. Das gleiche gilt für die Speicherzellen der Ebenen 32 und 33 sowie 34 und 35, 36 und 37, 38 und 39 sowie 40 und 41. Durch die Reihenschaltung der Speicherzellen 2 von jeweils zwei parallel zueinander verlaufenden und direkt nebeneinander liegenden Ebenen kann am Ende einer solchen Reihenschaltung 42,43,44,45,46,47 eine Spannungvon 120 Volt abgegriffen werden. An den Enden dieser Reihenschaltungen 42,43,44,45,46,47 sind sechs Anschlüsse 60,61,62, 63,64,65 für Parallelschaltungen vorgesehen. Diese Anschlüsse sind auf beiden Seiten der Reihenschaltungen 42,43,44,45,46,47 vorgesehen, jedoch nur auf einer Seite dargestellt.

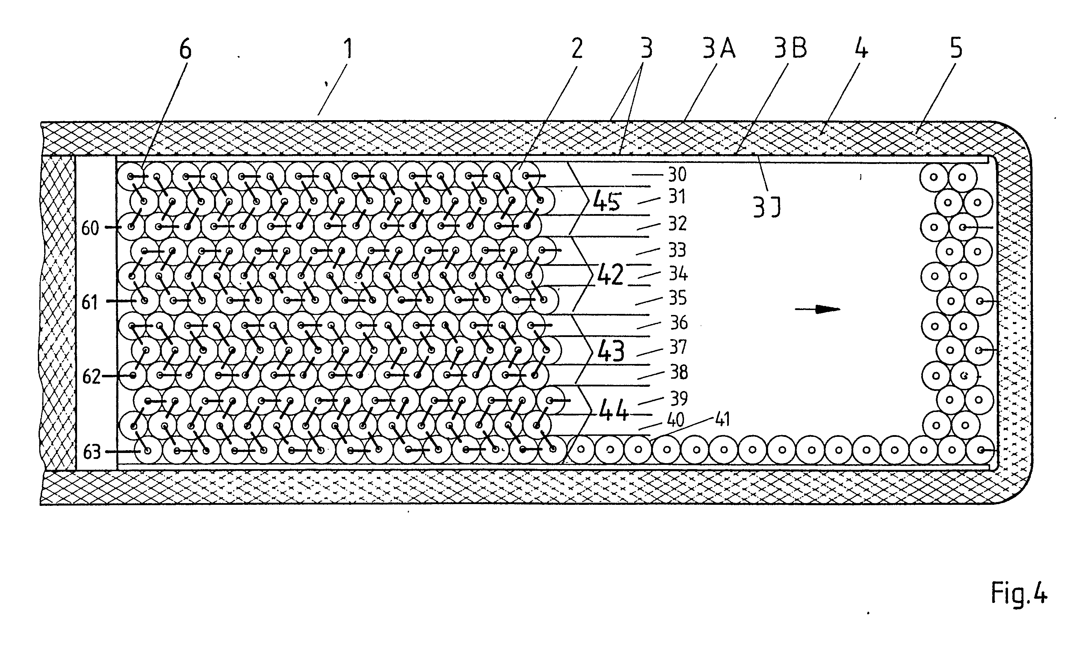

Figur 4 zeigt wiederum eine Hochtemperatur-Speicherbatterie 1, die im Aufbau mit der in Figur 1 dargestellten Hochtemperatur-Speicherbatterie übereinstimmt. Bei dieser Darstellung sind die Speicherzellen, welche in den Ebenen 30,31 und 32 liegen alle miteinander in Reihe geschaltet. Das gleiche gilt für die Speicherzellen der Ebenen 33,34,35 sowie für die Speicherzellen der Ebenen 36,37,38. Die Speicherzellen der Ebenen 39,40,41 sind ebenfalls miteinander in Reihe geschaltet. An jeder dieser vier Reihenschaltungen 42,43,44 und 45 kann eine Spannung von 180 Volt abgegriffen werden. An den Enden dieser Reihenschaltungen 42 bis 45 sind ebenfalls Anschlüsse 60,61,62,63 für Parallelschaltungen ausgebildet. Diese Anschlüsse 60, 61, 62,63 sind auf beiden Seiten vorgesehen, jedoch nur auf einer Seite dargestellt.

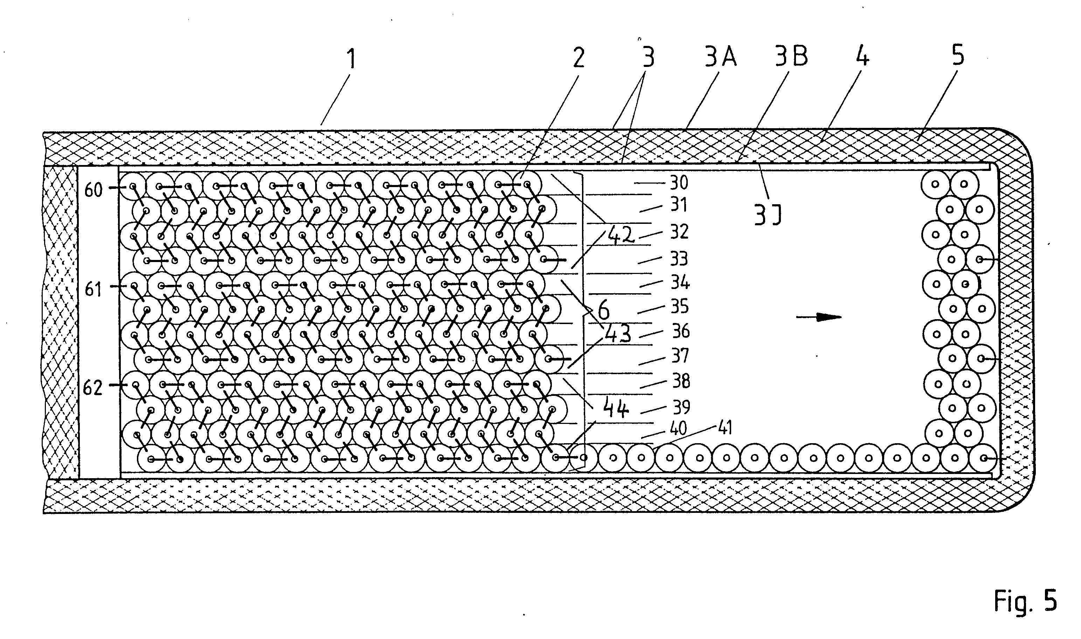

Bei der in Figur 5 dargestellten Hochtemperatur-Speicherbatterie 1 sind die Speicherzellen 2 von jeweils vier parallel zueinander verlaufenden und nebeneinander angeordneten Ebenen in Reihe geschaltet. Wie Figur 5 zeigt, sind insbesondere die Speicherzellen der Ebenen 30,31,32,33 miteinander in Reihe geschaltet. Das gleiche gilt für die Speicherzellen 2 der Ebenen 34,35,36,37. Ebenfalls miteinander in Reihe geschaltet sind die Speicherzellen 2 der Ebenen 38,39,40,41. Es werden hierdurch drei Reihenschaltungen 42,43,44 gebildet, an deren Enden jeweils eine Spannung von 240 Volt abgegriffen werden kann. Diese Reihenschaltungen 42,43,44 weisen Anschlüsse 60,61,62 für Parallelschaltungen auf. Diese Anschlüsse 60,61,62 sind auf beiden Seiten der Reihenschaltungen 42,43,44 vorgesehen, jedoch nur einmal dargestellt.

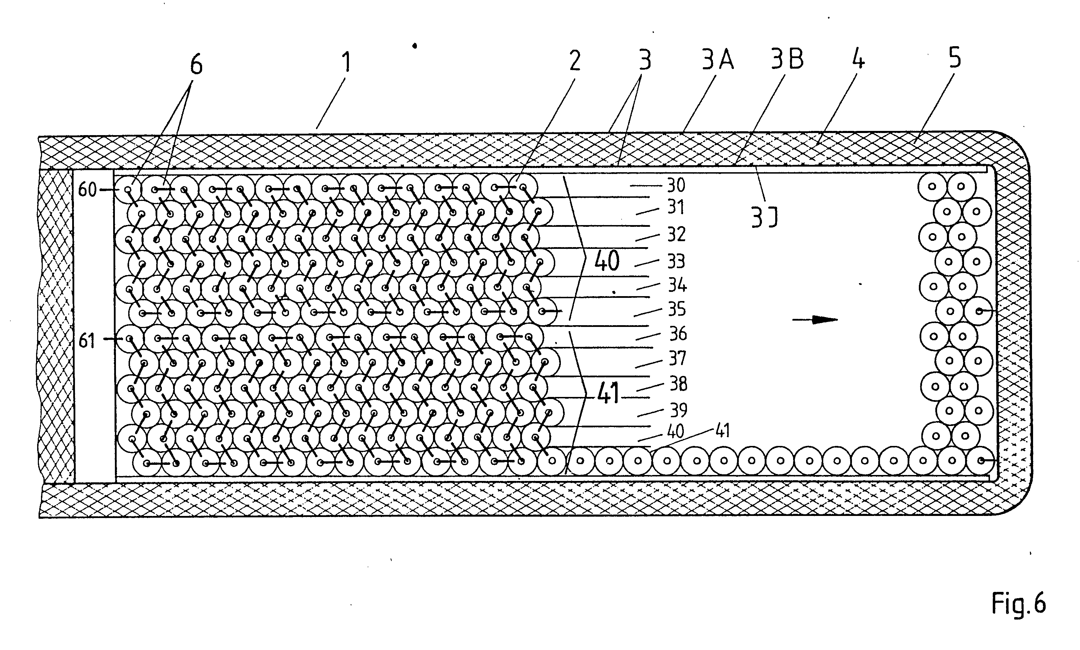

Bei der in Figur 6 dargestellten Ausführungsform einer Hochtemperatur-Speicherbatterie sind die Speicherzellen 2 miteinander in Reihe geschaltet, die in den jeweils sechs parallel zueinander verlaufenden und nebeneinander liegenden Ebenen 30,31,32,33,34,35 positioniert sind. Ebenso in Reihe geschaltet sind die Speicherzellen 2 der Ebenen 36 bis 41. An den beiden Reihenschaltungen 40 und 41 kann jeweils eine Spannung von 320 Volt abgegriffen werden. Zwei Anschlüsse 60 und 61 für die Parallelschaltungen dieser in Reihe geschalteten Speicherzellen 2 sind ebenfalls vorgesehen. Diese Anschlüsse 60 und 61 2 sind auf beiden Seiten der Reihenschaltungen 40 und 41 vorgesehen, jedoch nur einmal dargestellt.

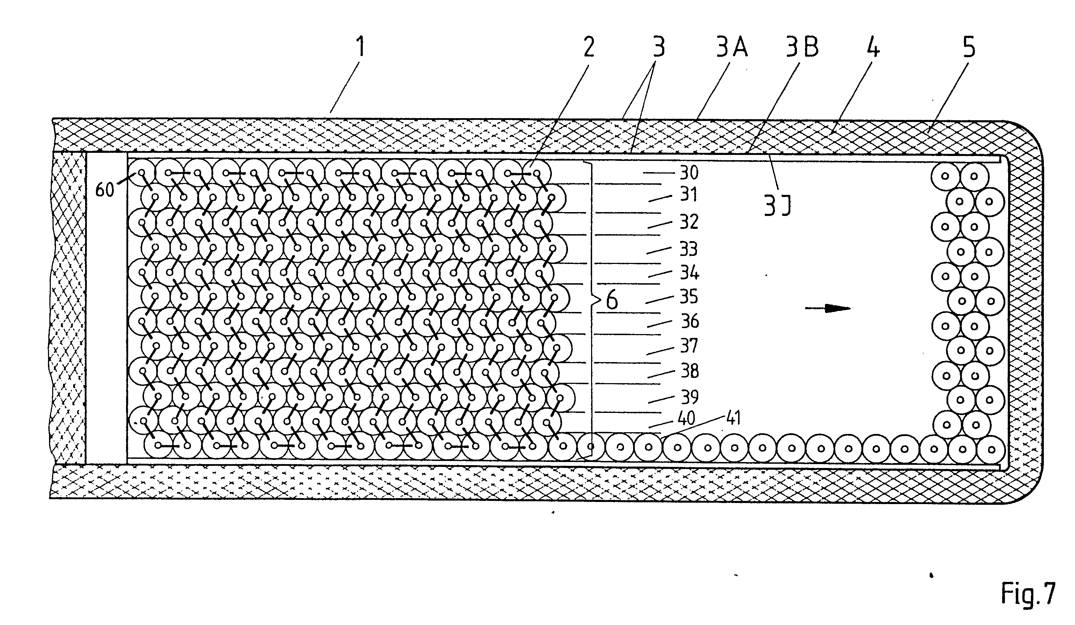

Bei der in Figur 7 dargestellten Hochtemperatur-Speicherbatterie sind alle 360 Speicherzellen 2 miteinander in Reihe geschaltet, so daß eine Spannung von 720 Volt zwischen den beiden Anschlüssen 60, von denen nur einer dargestellt ist, abgegriffen werden kann.

Die Erfindung beschränkt sich nicht nur auf die in den Figuren 2 bis 7 dargestellten Schaltungsvarianten, vielmehr umfaßt die Erfindung alle Schaltungen von Speicherzellen 2, bei denen die in zwei oder mehreren parallel zueinander verlaufenden direkt nebeneinander liegenden Ebenen angeordneten Speicherzellen 2 miteinander in Reihe geschaltet sind.

**Ansprüche**

1. Hochtemperatur-Speicherbatterie mit einem doppelwandigen Gehäuse (3) als Begrenzung und zwei oder mehreren Speicherzellen (2) im Innenraum (7), wobei jeweils eine definierte Anzahl von Speicherzellen (2) zu einem Modul (6) zusammengefaßt sind, dadurch gekennzeichnet, daß der Innenraum (7) eine gerade Anzahl von Speicherzellen (2) aufweist, die zu Modulen (6) zusammengefaßt sind, und daß solche Speicherzellen (2) miteinander in Reihe geschaltet sind, die in einer oder mehreren definierten Ebenen angeordnet sind.

2. Hochtemperatur-Speicherbatterie nach Anspruch 1, dadurch gekennzeichnet, daß alle Speicherzellen (2) in Reihe geschaltet sind, die in einer Ebene (30,31,32,33, 34,35,36,37,38,39,40,41) parallel zur Längsachse der Hochtemperatur-Speicherbatterie (1) positioniert sind, und daß Anschlüsse (60,61,62,63,64,65,66,67,68,69,70,71) für die Parallelschaltung dieser Reihenschaltungen vorgesehen sind.

3. Hochtemperatur-Speicherbatterie nach Anspruch 1, dadurch gekennzeichnet, daß alle Speicherzellen (2) miteinander in Reihe geschaltet sind, die in zwei Ebenen positioniert sind (30 und 31, 32 und 33, 34 und 35, 36 und 37, 38 und 39, 40 und 41), welche parallel zur Längsachse der Hochtemperatur-Speicherbatterie (1) verlaufen und nebeneinander liegen, und daß Anschlüsse (60,61,62,63,64,65) für die Parallelschaltung dieser Reihenschaltungen vorgesehen sind.

4. Hochtemperatur-Speicherbatterie nach Anspruch 1, dadurch gekennzeichnet, daß alle Speicherzellen (2) miteinander in Reihe geschaltet sind, die in drei nebeneinander liegenden und parallel zur Längsachse der Hochtemperatur-Speicherbatterie (1) verlaufenden Ebenen (30,31,32 bzw. 33,34,35 bzw. 36,36,38 bzw. 39,40,41) positioniert sind, und daß Anschlüsse (60,61,62,63) zur Parallelschaltung dieser Reihenschaltungen vorgesehen sind.

5. Hochtemperatur-Speicherbatterie (1) nach Anspruch 1, dadurch gekennzeichnet, daß die in jeweils vier nebeneinander liegenden und parallel zur Längsachse der Hochtemperatur-Speicherbatterie (1) verlaufenden Ebenen (30,31,32,33 bzw. 34,35,36,37 bzw. 38,39,40,41) positionierten Speicherzellen (2) miteinander in Reihe geschaltet sind, und daß Anschlüsse (60,61,62) zur Parallelschaltung dieser Reihenschaltungen vorgesehen sind.

6. Hochtemperatur-Speicherbatterie nach Anspruch 1, dadurch gekennzeichnet, daß die in jeweils sechs direkt nebeneinander liegenden und parallel zur Längsachse der Hochtemperatur-Speicherbatterie (1) verlaufenden Ebenen (30,31,32,33,34,35 bzw. 36,37,38,39,40,41) positionierten Speicherzellen (2) in Reihe geschaltet sind, und daß Anschlüsse (60,61) zur Parallelschaltung dieser Reihenschaltung vorgesehen sind.

7. Hochtemperatur-Speicherbatterie nach Anspruch 1, dadurch gekennzeichnet, daß alle im Innenraum (7) angeordneten Speicherzellen (2) in Reihe geschaltet und an den Enden dieser Reihenschaltung je ein Stromanschluß (60) vorgesehen ist.

8. Hochtemperatur-Speicherbatterie nach einem der Ansprüche 1 bis 7, dadurch gekennzeichnet, daß jeweils zwei nebeneinander liegende Reihen von Speicherzellen (2) zu einem Modul (6) zusammengefaßt sind, und daß die Längsachse eines jeden Moduls (6) zur Längsachse der Hochtemperatur-Speicherbatterie (1) senkrecht verläuft.

9. Hochtemperatur-Speicherbatterie nach einem der Ansprüche 1 bis 8, dadurch gekennzeichnet, daß fünfzehn Module (6) im Innenraum (7) vorgesehen sind und jeder Modul (6) zwei Reihen mit jeweils zwölf Speicherzellen (2) umfaßt, daß die Speicherzellen der beiden Reihen eines jeden Moduls (6) paarweise gegeneinander versetzt angeordnet sind, so daß eine hexagonale Anordnung der Speicherzellen (2) im Innenraum (7) ausgebildet ist, und daß die Längsachsen der Module (6) senkrecht zur Längsachse der Hochtemperatur-Speicherbatterie angeordnet sind.

EP 0 320 831 A2

Fig.1

Fig. 2

6      1      2   3   3A   3B   4    5

60    47    30
   31
61    42    32
   33
62    43    34
   35
63    44    36
   37
64    45    38
   39
65    46    40   41

3J

EP 0 320 831 A2

Fig. 3

Fig.4

EP 0 320 831 A2

Fig. 5

Fig.6

EP 0 320 831 A2

Fig. 7

EP 0 320 831 A2

Fig. 8